# EUROPÄISCHE PATENTSCHRIFT

(11) **EP 0 305 656 B1**
(45) Veröffentlichungstag und Bekanntmachung des Hinweises auf die Patenterteilung: **25.08.1993**
(21) Anmeldenummer: 88108598.9
(22) Anmeldetag: 30.05.1988
(51) Int. Cl.: B60R 21/32

(54) **Aufprallsensor für Kraftfahrzeuge**
Shock sensor for a motor vehicle
Détecteur de choc pour véhicule automobile

(30) Priorität: 31.08.1987 DE 3729020
(43) Veröffentlichungstag der Anmeldung: 08.03.1989
(73) Patentinhaber: Deutsche Aerospace AG, 81663 München (DE)
(72) Erfinder: Hora, Peter, D-8899 Edelshausen (DE); Laucht, Horst, Dr., D-8206 Bruckmühl (DE); Spies, Hans, D-8068 Pfaffenhofen (DE); Wöhrl, Alfons, D-8898 Schrobenhausen (DE)

(56) Entgegenhaltungen:
- EP-A- 0 167 792
- DE-A- 2 454 424
- DE-A- 3 615 650
- DE-A- 3 638 820

## Beschreibung

Die Erfindung bezieht sich auf eine Aufprallerkennungsschaltung für Kraftfahrzeuge zur Aktivierung von Sicherheitseinrichtungen in Form von Rückhaltesystemen.

Sensoren zur Aktivierung von Rückhaltesystemen wie beispielsweise Sicherheitsgurte, Luftkissen und ähnliche Konzeptionen, sind in den verschiedensten Ausführungsformen bekannt. Auch die Anmelderin hat beispielsweise in der DE-OS 24 54 424 einen elektronischen Sensor zur Auslösung solcher Systeme offenbart, der einmal durch eine zuverlässig und genau arbeitende Schaltung sowohl den Bauelementeaufwand erheblich reduziert und zum andermal die Anlaufschwierigkeiten solcher Systeme verhindert, als auch eventuell vorhandene Defekte sofort feststellt. Diese Sensoren haben sich im Einsatz grundsätzlich bewährt. Nunmehr werden jedoch durch Verordnungen des TÜV zur Auschaltung systematischer Fehler erhöhte Redundanzen solcher Rückhaltesysteme gefordert. Dies führt zwangsläufig wieder zu einem vermehrten Bauteil- und Schaltungsaufwand, der ebenfalls zwangsläufig systemtypische Fehlerquellen in sich birgt.

Aus der EP 0 167 792 A1 ist eine Schaltungsanordnung zur Registrierung von fehlerhaften Auslösesignalen für ein Rückhaltesystem bekannt, in dem auch die Verwendung eines zweiten Auslösekreises beschrieben ist. Dieser hilft mit, ggf. eine Warneinrichtung auszulösen, wenn gleichzeitig mit dem Auftreten eines Auslösesignals im ersten Kreis ein Nicht-Ansprechen im zweiten Kreis vorliegt.

Der vorliegenden Erfindung liegt die Aufgabe zugrunde, einen Aufprallsensor der eingangs genannten Art zu schaffen, der mit einem geringen Bauteil- und Schaltungsaufwand eine erhöhte Zuverlässigkeit gegen Nichtauslösung solcher Rückhaltesysteme aufweist, ohne daß hierfür mechanisch bewegte Teile erforderlich wären.

Diese Aufgabe wird durch die im Anspruch 1 aufgeführten Maßnahmen gelöst. In den Unteransprüchen sind Weiterbildungen und Ausgestaltungen aufgezeigt und in der nachfolgenden Beschreibung ist ein Ausführungsbeispiel erläutert, das in den Figuren der Zeichnung skizziert ist. Es zeigen:
- Fig. 1: ein Blockschaltbild des vorgeschlagenen Aufprallsensors mit einem elektrischen Schalter zur Durchschaltung der Zündenergie,
- Fig. 2: einen Blockschaltbild-Ausschnitt gemäß Fig. 1 für ein Ausführungsbeispiel, bei dem in jedem Zündkreis ein elektrischer Schalter angeordnet ist.

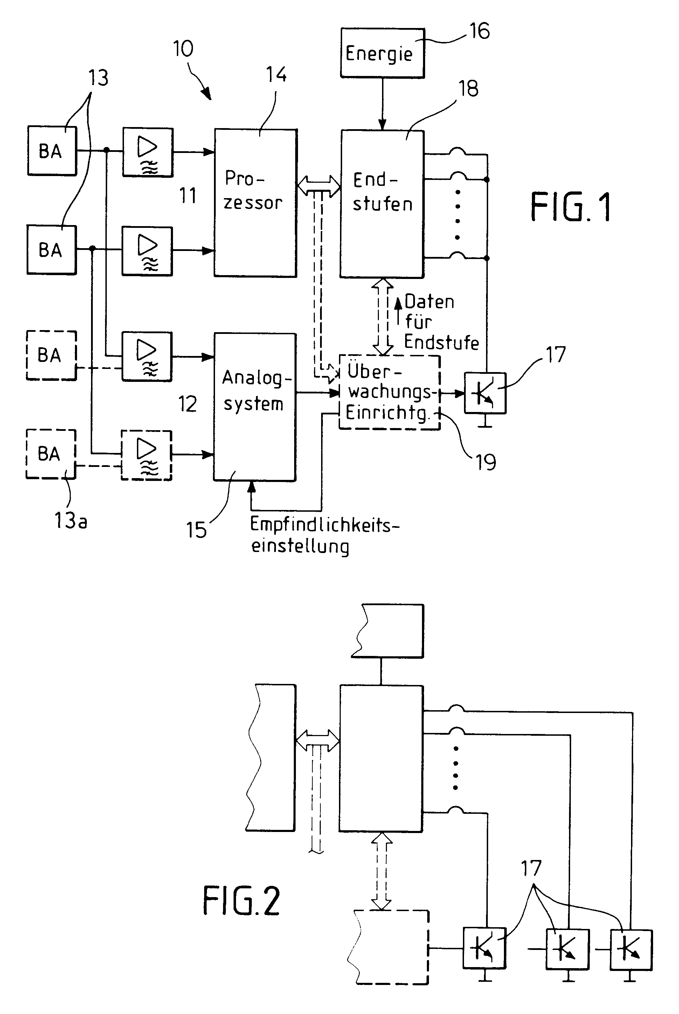

Der in Figur 1 skizzierte Aufprallsensor 10 setzt sich aus ein oder zwei Beschleunigungsaufnehmern 13 zusammen, die ihre Signale über Verstärker einem Prozessor - vorwiegend ein Mikroprozessor 14 - und einem Analogsystem 15 zuführen. Bisher transferierte der Prozessor seine Signale an eine Endstufeneinheit 18 die die Zündenergie aus der Energiequelle 16 an den elektrischen Schalter 17 durchschaltete. Um nun die geforderte Erhöhung der Sicherheit gegen ungewolltes Auslösen zu erhöhen, wird nunmehr dem Standardpfad 11 ein zweiter unabhängiger Auslösepfad 12 zugeordnet, der aus einem oder mehreren Beschleunigungsaufnehmern 13a bebildet wird, die ihre Signale an das Analogsystem 15 des Sensors 10 eingeben. Diesem Sensor 10 beziehungsweise dessen zwei Signalpfade 11 und 12 ist nun eine Überwachungseinheit 19 zugeordnet, die sicherstellt, daß einmal ein Fehler in einem Pfad erkannt und automatisch entschieden wird, daß der fehlerfreie Pfad zu aktivieren ist und zum andernmal, daß die sogenannte Plausibilität festgestellt wird, wenn beide Pfade fehlerfrei sind. Das heißt, ist beispielsweise der zweite Pfad 12 empfindlicher als der erste Pfad 11, dann muß der erstere zeitlich früher ein Auslösesignal erzeugen. Ein weiteres Beispiel für die Funktionen der Überwachungseinrichtung 19 ist, wenn beispielsweise der erste Pfad 11 ausfällt und das Analogsystem 15 für die korrekte Auslösung zu empfindlich ist, dann wird die Empfindlichkeit in diesem System entsprechend eingestellt. Aus der Figur 1 ist der Aufbau des Aufprallsensors 10 mit seinem sogenannten Analogpfad bzw. Auslösepfad 12 so dargestellt, daß sich weitere Ausführungen zu Aufbau und Funktion erübrigen dürften.

Die Figur 2 skizziert ein erweitertes Ausführungsbeispiel des vorbeschriebenen Aufprallsensors 10 bei dem in jedem Zündkreis ein elektrischer Schalter 17 eingebaut ist. Diese Ausführungsform hat den Vorteil, daß bei Kurzschluß zwischen der Stromversorgung des Kraftfahrzeugs und einer der Zündleitungen keine gegenseitige Beeinflußung entsteht und das Gesamtsystem dadurch wesentlich sicherer und zuverlässiger wird.

Zur Erhöhung der Zuverlässigkeit in Bezug auf die Sicherheit gegen ein ungewolltes Auslösen des Aufprallsensors 10 ist vorgesehen, daß die Auslöseschwelle des zweiten Auslösepfades 12 niedriger liegt, als diejenige im Standardpfad 11. Durch die vorgeschlagene Konzeption wird verhindert, daß bei einer Fehlauslösung in diesem Standardpfad 11 Energie zu den Zündern gelangt und sichergestellt, daß bei einer regulären Auslösung in beiden Auslösepfaden die erforderlichen Auslösebedingungen erfüllt sind.

## Patentansprüche

1. Aufprallerkennungsschaltung für Kraftfahrzeug-Sicherheitseinrichtungen in Form von Rückhaltesystemen, mit einem Sensor in einem Auslösepfad auf Beschleunigung oder Vibrationen ansprechend, wobei zusätzlich zum elektronischen Standardauslösepfad (11) ein zweiter unabhängiger elektronischer Auslösepfad (12) in der gleichen Schaltung zur Aktivierung einer zusätzlichen Energieversorgung prüfbar angeordnet ist, und bei einer Fehlauslösung im Standardauslösepfad (11) die Überwachungseinrichtung (19) die Endstufeneinrichtung (18) für die Zündenergiezufuhr an den oder die elektrischen Schalter (17) sperrt, **dadurch gekennzeichnet,** daß der zweite unabhängige Auslösepfad (12) von Beschleunigungsaufnehmern (13a) gebildet wird, die als Signalgeber für den Analogpfad dienen und eine Überwachungseinrichtung (19) angeordnet ist, die einmal die Fehlerfreiheit der Pfade feststellt, den günstigsten Pfad zur Aktivierung auswählt und die Empfindlichkeit des Analogkreises einstellt.

2. Aufprallerkennungsschaltung nach Anspruch 1, **dadurch gekennzeichnet,** daß jedem Zündkreis in den zwei Zündpfaden (11, 12) ein elektronischer Leistungsschalter (17) zugeordnet ist.

3. Aufprallerkennungsschaltung nach den Ansprüchen 1 oder 2, **da**d**urch gekennzeichnet,** daß die Auslöseschwelle des zweiten Auslösepfades (12) niedriger liegt als die Auslöseschwelle im Standardauslösepfad (11).

## Claims

1. Impact-detector circuit for motor vehicle safety devices in the form of restraining systems, comprising a sensor in a triggering path which responds to acceleration or vibrations, wherein in addition to the electronic standard triggering path (11) a second independent electronic triggering path (12) is controllably arranged in the same circuit for activation of an additional energy supply, and that in the event of maltriggering in the standard triggering path (11) the control unit (19) blocks the end-stage unit (18) for the supply if ignition energy to the electrical circuit(s), **characterised in that** the second independent triggering path (12) is formed by acceleration pickups (13a) which serve as signal generators for the analog path and that there is a control unit (19) which for one determines that the paths are free of errors, selects the most favourable path for activation and sets the sensitivity of the analog circuit.

2. Impact-detector circuit according to claim 1, **characterised in that** each ignition circuit in the two ignition paths (11, 12) is associated with an electronic output switch (17).

3. Impact-detector circuit according to claims 1 or 2, **characterised in that** the triggering threshold of the second triggering path (12) is lower than the triggering threshold in the standard triggering path (11).

## Revendications

1. Circuit détecteur de collision pour dispositifs de sécurité de véhicules automobiles se présentant sous la forme de dispositifs de retenue, circuit comportant un détecteur qui est placé dans une voie de déclenchement et réagit à l'accélération ou aux vibrations, une deuxième voie de déclenchement (12) électronique étant disposée avec possibilité de contrôle dans le même circuit, en plus de la voie de déclenchement (11) électronique standard, pour activer une alimentation en énergie supplémentaire et le dispositif de surveillance (19) bloquant l'étage final (18) pour l'alimentation en énergie du ou des commutateurs (17) électriques, en cas de déclenchement intempestif dans la voie standard (11), caractérisé par le fait que la deuxième voie de déclenchement (12) indépendante est constituée par des capteurs d'accélération (13a) qui servent de capteurs pour la voie analogique et qu'il est prévu un dispositif de surveillance (19) qui vérifie l'absence de défaut dans les voies, sélectionne la voie la mieux adaptée pour le déclenchement et règle la sensibilité du circuit analogique.

2. Circuit détecteur de collision selon la revendication 1, caractérisé par le fait qu'un commutateur de puissance (17) électronique est associé à chacun des circuits d'allumage des deux voies de déclenchement (11, 12).

3. Circuit détecteur de collision selon la revendication 1 ou 2, caractérisé par le fait que le seuil de déclenchement de la deuxième voie de déclenchement (12) est inférieur au seuil de déclenchement de la voie standard (11).
